# EUROPEAN PATENT APPLICATION

(11) **EP 1 538 434 A1**
(43) Date of publication of application: **08.06.2005**
(21) Application number: 04078276.5
(22) Date of filing: 02.12.2004
(51) Int. Cl.: G01M 3/36

(54) **Method and apparatus for leak testing gas-filled flexible packages**

(30) Priority: 02.12.2003 NL 1024922
(71) Applicant: Pi-Wi Beheer B.V., 6039 AP Stramproy (NL)
(72) Inventor: Aquarius, Pieter Theodorus Johannes, 6039 AC Stramproy (NL)
(74) Representative: Winckels, J.H.F., Mr. Ir.

(57) **Abstract**

A method for leak testing gas-filled flexible packages, wherein the packages (6) are passed between two endless conveyor belts (1, 2) along a test path (5), the conveyor belts (1, 2) exerting a test pressure on each package (6) along at least one pressure segment of the test path, while at a first test position of the test path (5) the thickness of each package (6) is measured, while on at least a second position of the test path (5), which second disposition is located at a distance from the first test position viewed along the test path (5), the thickness of each package (6) is measured for leak testing the package.

In addition, the invention provides an apparatus for leak testing gas-filled flexible packages.

## Description

The invention relates to a method for leak testing gas-filled flexible packages, wherein the packages are passed between two endless conveyor belts along a test path, the conveyor belts exerting a test pressure on each package along at least one pressure segment of the test path, while at a first test position of the test path the thickness of each package is measured.

Such a method is known per se from US patent 5,279,099. In the known method, each package to be tested is brought between an upper and a lower conveyor belt of a test apparatus. The upper conveyor belt is provided with rollers for compressing the packages by means of gravity between the conveyor belts. One of the rollers is provided with a sensor for determining whether this roller compresses the package to a desired final thickness. With an incorrectly blown up package, the roller will move to a position adjacent the lower conveyor belt, which is detected by means of the sensor. Depending on the signal of the sensor, each package compressed between the conveyor belts is approved or rejected. The distance between the two conveyor belts can be set before a test cycle begins, so that packages of different dimensions can be leak-tested.

A drawback of the known method is that it is relatively inaccurate. Moreover, with the known method, it is relatively awkward to test different packages having different thicknesses in succession. Further, with the known method, continuous, successive testing of packages with different thicknesses is not possible. Moreover, the known method requires relatively much space.

The object of the present invention is an improvement of the method mentioned in the opening paragraph. In particular, the object of the invention is a method for leak testing flexible packages, which method is relatively accurate.

To this end, the method according to the invention is characterized in that at at least a second test position of the test path, which test position is located at a distance from the first test position viewed along the test path, the thickness of each package is measured for leak testing the package.

In this manner, the thickness of each package can be measured at at least two separated test positions. Thereupon, it can simply be determined whether or not the package leaks. The first test position can for instance be located at or adjacent the beginning of the test path, while the second test position is located at or adjacent an end of the test path. Preferably, the test pressure mentioned is exerted on each package at least between the first and the second test position. When there is a leak, gas will escape from the respective package, which renders the package thinner, at least has the volume of the package decrease. The volume decrease can be detected in a simple manner by means of the at least two thickness measurements, in order that the leaking package can be rejected.

By utilising thickness differences when leak testing, instead of testing for a given, desired final thickness, packages of different dimensions can simply be successively tested in a continuous process. Moreover, in this manner, it can be avoided that the different thicknesses of the packages to be tested need to be known before the packages are leak tested with the present method.

Furthermore, through the use of conveyor belts for conveying and, moreover, compressing the packages along the test path, the method can be carried out reliably with relatively simple means.

According to an advantageous embodiment of the invention, the test path is provided with at least one bend.

In this manner, the method can be carried out in a relatively small space, while the test path still has a relatively long length. As a result, the test pressure can be exerted on the packages for a relatively long period of time, so that relatively small leaks still cause a volume decrease such that these leaks can be detected by the thickness difference measurement. Further, the conveyor belts can exert a particular, for instance additional, pressure on each package when the package negotiates a bend.

The invention further relates to an apparatus for leak testing gas-filled flexible packages, which apparatus is provided with at least two endless conveyor belts, the conveyor belts being designed for passing the packages along a test path, while the conveyor belts are designed to exert a test pressure on each package along at least one pressure segment of the test path.

Such an apparatus is also known from US 5,279,099. The known apparatus has the above-mentioned drawbacks. In particular, the known apparatus is relatively inaccurate and, moreover, not capable of successively leak testing packages with different thicknesses in a continuous process.

The object of the present invention is an improvement of the known apparatus. In particular, the object of the invention is an apparatus for leak testing gas-filled flexible packages, which apparatus is relatively accurate.

To this end, the apparatus according to the invention is characterized in that the apparatus is provided with at least two thickness gauges, arranged for measuring the thickness of each package at at least two test positions of the test path.

With the thickness gauges, differences in thickness of the packages can be measured, which renders the apparatus particularly accurate. With the apparatus, preferably, packages of different thicknesses can be tested in a continuous process. As the packages are compressed between the conveyor belts, the apparatus is relatively insensitive to malfunction. Further, the conveyor belts can exert a relatively great test pressure on the packages in a evenly distributed manner, which prevents the packages from becoming damaged.

According to the invention, it is particularly advantageous when the test path extends at least partly, preferably substantially, in a substantially vertical direction.

In this manner, the apparatus can take up relatively little floor space, so that the apparatus can also be used in relatively small spaces.

Further embodiments of the invention are described in the subclaims. Presently, the invention will be clarified with reference to an exemplary embodiment and the drawing. In the drawing:
Fig. 1 shows a side view of an exemplary embodiment of the invention;
Fig. 2 shows a cutaway front view of the side view represented in Fig. 1; and
Fig. 3 shows a detail of the front view represented in Fig. 2.

Unless expressly stated otherwise, herein, "approximately", "about" or such terms are understood to include at least a value deviating plus and minus 10% of the given respective value.

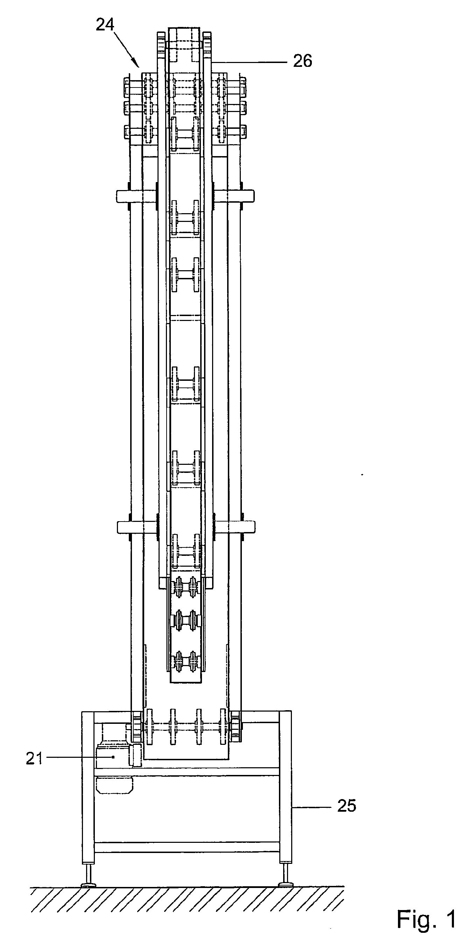

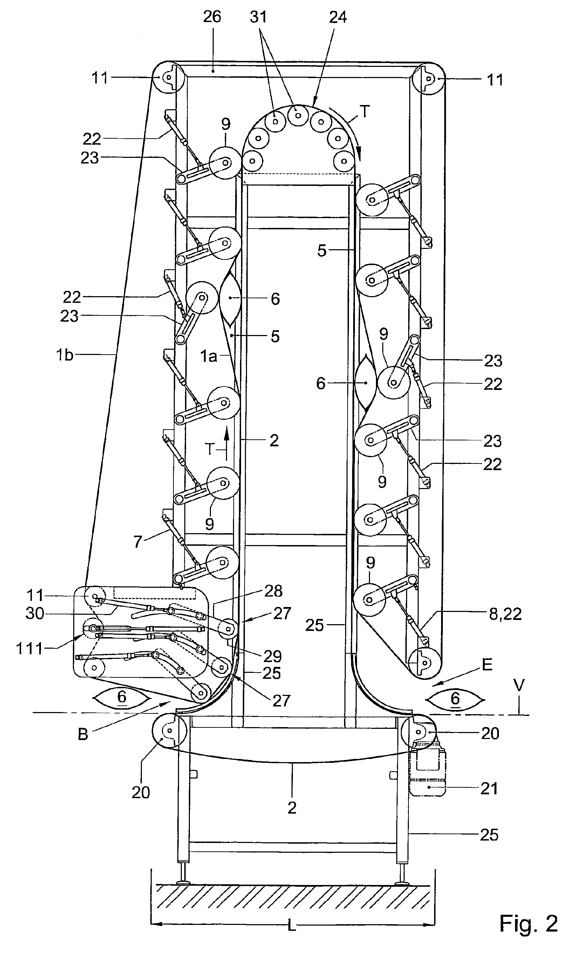

Figs. 1 - 3 show an exemplary embodiment of an apparatus for leak testing gas-filled flexible packages 6. The apparatus is provided with two endless conveyor belts 1, 2. The conveyor belts 1, 2 are designed for passing the packages 6 along a substantially vertical, substantially U-shaped test path 5. The conveyor belts 1, 2 have a freedom of movement relative to each other such that packages 6 with different thicknesses can be conveyed along the test path 5. The test path 5 extends between a path beginning indicated with arrow B in Fig. 2, and a path end E. Moreover, the conveyor belts 1, 2 are designed for exerting a test pressure on each package 6 along a pressure segment, at least on a number of press-on positions, of the test path 5. The term "conveyor belt" should be understood in a relatively broad sense. For instance, each conveyor belt 1, 2 can be designed in different manners, for instance as a link belt, conveyor web, a chain, a belt of elastic or non-elastic material or the like. The belts can each be manufactured from various materials, for instance plastic, rubber, metal and/or different material.

The apparatus is provided with a main frame 25. The second conveyor belt 2 is coupled to the main frame 25 and extends in substantially vertical direction. A lower end of the second belt 2 is guided around two horizontally arranged, spaced apart wheels 20. One of these wheels 20 is coupled to a drive 21 for driving the second belt 2 via this wheel 20 and advance it at a particular conveying rate. A top end of the second belt 2 is provided with a number of return wheels 31 for gradually returning the second belt along a bend 24 of approximately 180°.

The first belt 1 comprises a first, substantially U-shaped part 1a extending around a substantially U-shaped part of the second belt 2. The test path 5 mentioned extends substantially between this first part 1a of the first belt 1 on the one side and the second belt 2 on the other side. The first belt 1 further comprises a substantially U-shaped second part 1b which extends not along the test path 5 mentioned but at a distance therefrom. The second part 1b of the first conveyor belt 1 is passed around guiding means, comprising guiding rollers 11, 111 such that a top part of this second part 1b is guided around an outer frame 26 of the apparatus and around the bend 24. The guiding rollers 11, 111 are coupled to the outer frame 26 of the apparatus.

Driving the first belt 1 is carried out, for instance, by direct or indirect contact with the second belt 2, and/or by means of a drive (not shown). During use, the first belt 1 has substantially the same conveying rate as the second belt 2. Preferably, this conveying rate is such that each package 6 travels the test path 5 in approximately 2 s or more, preferably approximately 5 s or more, and more preferably approximately 10 s or more, so that for a relatively long testing period a test pressure can be exerted thereon.

As the first part 1a of the first conveyor belt 1 and the second conveyor belt extend substantially vertically, the test path 5 extends substantially vertically too. The bend 24 of conveyor belts 1, 2 divides the test path 5 in a first part, in front of the bend 24 and a second part, behind the bend. The fact is that the test path 5 has substantially two different conveying directions T, in particular first substantially upward and then downwards again, viewed in downstream direction from the path beginning B. As shown in Fig. 2, the present apparatus is relatively narrow, which is achieved by providing in a substantially vertical test path. Therefore, the apparatus has a relatively short built-in length L. This built-in length L can for instance be smaller than approximately 5 m, in particular smaller than approximately 2 m.

The apparatus is provided with first press-on means 9, 22, 23 arranged at the press-on positions, i.e. along the vertical parts of the first part 1a of the first belt 1. The press-on means are each designed to press at least an adjacent part of the first conveyor belt 1 towards an opposite part of the second conveyor belt 2. The first press-on means 9, 22, 23 are coupled to the outer frame 26 of the apparatus. The first press-on means are provided with pressure cylinders 22 and pivoting arms 23, which arms 23 are provided at free ends with press-on rollers 9. The pressure cylinders 22 are designed for pressing the first part 1a of the first conveyor belt 1 - via the pivoting arms 23 and press-on rollers 9 - against the outside of the second conveyor belt 2. Moreover, the first press-on means 9, 22, 23 are designed for giving the first conveyor belt 1 a transversal freedom of movement relative to the second conveyor belt 2 such that packages 6 with different thicknesses can be conveyed along the press-on position between the conveyor belts 1, 2. With the belts 1, 2 in a position moved together by the press-on means, the parts of the belts 1, 2 facing each other can, for instance, extend against each other or at a relatively small distance from each other, at least when no package 6 is present between the belts 1, 2.

The present apparatus is provided with two thickness gauges 7, 8 arranged at a distance from each other, each of which being designed for measuring the thickness of the package 6 carried therealong. The first thickness gauge 7 is arranged at a first test position, in front of the bend 24 of the test path 5, and the second thickness gauge 8 at a second test position behind this bend 24 viewed in downstream direction along the test path 5. In the present exemplary embodiment, the thickness gauges 7, 8 are arranged adjacent the beginning B and the end E of the test path 5. As a result, the thickness gauges 7, 8 can measure the change in thickness of each package 6, which change in thickness the package 6 has obtained when travelling substantially the entire test path 5.

In the exemplary embodiment, the thickness gauges 7, 8, are integrated in the first press-on means 9, 22, 23 arranged adjacent the beginning B and end E of the test path 5. Each thickness gauge 7, 8 comprises a sensor which is arranged for determining a transversal displacement of at least a part of the first conveyor belt 1 relative to the second conveyor belt 2. Each thickness gauge 7, 8 is arranged for measuring the pivotal movement of the pivoting arm 23 of the respective press-on means. The thickness gauges 7, 8 can each be included in, for instance, the press-on cylinders 22 of the pivoting arms 23 and/or be connected to these press-on cylinders 22. The thickness gauges 8, 9 can each be designed in different manners and for instance be arranged for measuring said transversal displacement of the first belt 1 optically, mechanically, by means of pressure, electrically and/or otherwise. Further, the thickness gauges 7, 8 can, for instance, not be integrated in the first press-on means.

The apparatus further comprises a control (not shown) for rejecting each package 6 with a particular change of the thickness of this package measured by the thickness gauges 7, 8. The control is further designed for regulating a test pressure exerted by the press-on means. It will be clear to the skilled person that such a control can comprise, for instance, one or more computers, (micro)electronics, and/or the like, designed for processing measuring signals generated by the sensors and, based on the measuring result, take the desired actions.

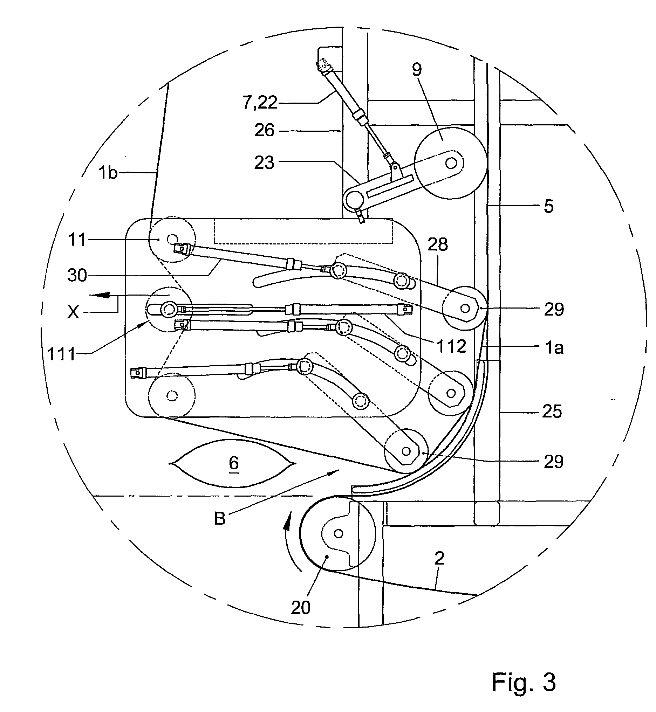

The length of the second part 1b of the first conveyor belt 1 located outside the test path 5 can be shortened and lengthened again for lengthening the first part 1a of the first conveyor belt 1 along the test path 5 and shortening it again when the packages 6 are conveyed along the test path 5. In the exemplary embodiment, the guiding rollers 11, 111 of the second part 1b are designed for adjusting the length of the second part 1b of the conveyor belt 1 for the purpose of adjusting the length of the first part 1a. Furthermore, the guiding rollers 11, 111 are designed for adjusting the length of the second part 1b of the first conveyor belt 1 under the influence of a tensile force applied by the first part 1a on this second part 1b. In the present exemplary embodiment, this is achieved in a simple manner in that one of these guiding rollers 111 is translatable relative to the other guiding rollers 11. As is represented in Figs. 2 and 3, this translatable guiding roller 11 is placed between two guiding rollers 11 disposed on fixed positions. The first conveyor belt 1 is woven around these three guiding rollers 11, 111. The lengthening of the first part 1a of the first belt 1 is desired in particular for having a package 6 travel the bend 24 in a smooth manner, while the package 6 is prevented from becoming stuck between the belts 1, 2 in front of the bend 24.

In the position shown in Fig. 3, the translatable guiding roller is located at a position moved away from the two adjoining rollers 11. Here, the outer part 1b of the first belt 1 has a particular length associated with this roller position. The inner part 1a of the first belt 1 is then located in the bend 24 adjacent or on the second belt 2. When, during use, a package 6 negotiates the bend 24 of the test path 5, the package 6 pushes the first part 1a of this first belt 1 upwards so that a particular tensile force is formed in the first belt 1. This tensile force is transmitted via the second belt part 1b on the translatable guiding roller 111. Under the influence of this tensile force, the translatable roller 111 is moved towards the two other rollers 11 in a direction indicated with arrow X in Fig. 3, which leads to a shortening of the second part 1b of the first belt 1 and a lengthening of the first part 1a. In this manner, sufficient belt length can be made available for having the package 6 negotiate the bend 24. The translatable guiding roller 111 is provided with a pressure cylinder 112 for counteracting the translation of the roller 111, in particular for returning the roller 111 to an initial position after a package 6 has negotiated said bend 24. Lengthening and shortening of the first part 1a of the first belt 1 can furthermore take place when one or more packages 6 travel other parts of the test path 5. It is noted that during negotiation of the bend 24, a package can experience an additional test pressure as a result of the weight of the first belt 1 and the force exerted by the pressure cylinder 112 on the first belt 1.

The apparatus further comprises a number of second press-on means 27 for bringing the second belt 1 towards the first belt 2 at a run-in part of the test path 5 extending from the path beginning B. The second press-on means 27 comprise press-on rods 28 with press-on rollers 29, the press-on rods 28 being translatable through pressure cylinders 30. These second press-on means are arranged for giving the first conveyor belt 1 a transversal freedom of movement relative to the second conveyor belt 2 such that packages 6 with different thicknesses can be included between the conveyor belts 1, 2 at the path beginning B.

Preferably, the test path has a length of at least approximately 2 m, in particular at least approximately 4 m. As a result, the packages 6 can be tested over a relatively large distance and hence during a relatively long testing period in a continuous testing process, thereby increasing the accuracy of the leak testing.

Preferably, the apparatus further comprises at least one cleaning apparatus for cleaning at least one of the conveyor belts 1, 2. Such a cleaning apparatus is not represented in the Figures. According to an advantageous embodiment, the cleaning apparatus comprises an installation for spraying or spouting the respective belt 1, 2 clean with a cleaning agent, for instance water and/or the like. If the cleaning agent comprises a liquid, preferably, the cleaning agent is also provided with a drying apparatus for drying the belt after cleaning.

During use, the packages 6 are supplied to the beginning B of the test path 5. The packages 6 can for instance have similar or different thicknesses. Supply of the packages 6 can for instance be done in a horizontal direction, along a horizontal conveying plane V, preferably by a supply conveyor or the like (not shown). At the path beginning B, the packages 6 are included between the first and second belt 1, 2 and then, by the belts 1, 2, carried along the second press-on means 27 and the first press-on means 9, 22, 23 in the conveying directions T along the test path 5. Via the first belt 1, the first press-on means 9, 22, 23, exert a test pressure on each package 6 along the press segment of the test path 5. Due to the relatively great length of the test path 5, the test pressure can be exerted on each package 6 relatively long. Moreover, when negotiating the bend 24, each package 6 is compressed between the conveyor belts 1, 2. As the test path 5 extends substantially vertically, furthermore, each package 6 to be tested only travels a little distance in horizontal direction. After travelling the test path 5, the packages 6 leave the apparatus at the path end E and can be discharged by, for instance, a conveyor (not shown). As shown in Fig. 2, for instance two packages 6 can be passed simultaneously through the test path 5 to be tested for leaks, so that a great number of packages 6 can be tested per time unit. Moreover, the apparatus can then, simultaneously, exert a test pressure on both packages 6, which is clearly represented in Fig. 2b. The packages can travel the test path smoothly, in particular the bend 24, due to an associated adjustment of the length of the first part 1a of the first belt 1.

At the first and a second test position, the thickness of each package 6 is measured by the thicknesses gauges 7, 8. Two conveyor belts 1, 2 are then moved towards each other at each test position by the pressure cylinders 22 of the thickness gauges 7, 8. The measuring results are transmitted to the control for measuring a possible change in thickness. If substantially no change in thickness of a package is measured, the respective package can be approved by the control. If, conversely, a particular change in thickness has occurred the package is rejected by the control. The package can then for instance be marked by means which are not represented, be punctured and/or be removed. By measuring for differences in thickness, the packages 6 are accurately leak tested. Further, different packages having different sizes can rapidly be checked in succession.

It is self evident that the invention is not limited to the exemplary embodiment described. Various modifications are possible within the framework of the invention as set forth in the following claims.

For instance, the term "gas-filled" should be understood in a broad sense. This gas can for instance comprise at least one gas, a gas mixture, air, nitrogen and/or the like. The packages to be tested can further be provided with various items, for instance one or more products, foodstuffs and/or the like. Each package can be designed to be flexible in various manners, for instance in that the package comprises a gastight bag, a holder with one or more flexible walls, a film or the like.

Further, the term "vertical" should be understood in a broad sense. For instance, "vertical" can be understood as a direction including an angle with a vertical plane which angle is in the range of approximately plus or minus 45°. More in particular, this angle is in the range of approximately plus or minus 30°.

Moreover, the test path can extend substantially in a particular direction, for instance horizontally, vertically, at an inclination or in another direction. Here, the term "substantially" means that at least 50% of the test path, in particular at least 80% of the test path extends in the given direction. Further, the test path can extend in different directions, for instance when the test path comprises one or more bends. The test path can for instance contain one or more straight, bent or differently formed path segments.

In addition, the apparatus can be provided with different press-on means for exerting pressure and/or tensile forces on particular parts, for instance pressure cylinders, pneumatic means, hydraulic means, spring means, weights and/or the like. The different press-on means can for instance be controllable together, in groups and/or individually. Further, the press-on means can each, for instance, be designed for exerting one or more, in particular variable, test pressures to the packages.

Further, the first and at least second test position can be located at different positions of the test path. The first test position can, for instance, be located at or adjacent the beginning of the test path and/or the pressure of segment of that path, while the second test position can be located downstream thereof, for instance at or adjacent an end of the test path and/or the pressure segment thereof.

## Claims

1. A method for leak testing gas-filled flexible packages, wherein the packages (6) are passed between two endless conveyor belts (1, 2) along a test path (5), the conveyor belts (1, 2) exerting a test pressure on each package (6) along at least one pressure segment of the test path, while at a first test position of the test path (5) the thickness of each package (6) is measured, while at at least a second position of the test path (5), which second position is located at a distance from the first test position viewed along the test path (5), the thickness of each package (6) is measured for leak testing the package.

2. A method according to claim 1, wherein the test path is provided with at least one bend (24).

3. A method according to claim 2, wherein the first test position is located in front of said bend (24) while at least the second test position is located behind the bend (24).

4. A method according to any one of the preceding claims, wherein a first part (1a) of the first conveyor belt (1) located along the test path (5) is at least partly lengthened with a part of the second part (1b) of this conveyor belt (1) located outside the test path (5) when at least one package (6) travels at least a part (24) of the test path (5).

5. A method according to at least claim 2 and 4, wherein the first part (1a) of said conveyor belt (1) is at least lengthened when a package (6) negotiates the at least one bend (24).

6. A method according to any one of the preceding claims, wherein at least two packages (6) with different thicknesses are and/or can be passed along the test path (5) simultaneously.

7. A method according to any one of the preceding claims, wherein said test path (5) extends over at least a particular distance in substantially vertical direction.

8. A method according to any one of the preceding claims, wherein at each test position, the two conveyor belts (1, 2) are moved towards each other by a press-on apparatus (22) for determining the thickness of each package (6) moving along that position.

9. A method according to any one of the preceding claims, wherein the conveyor belts (1, 2) have a freedom of movement relative to each other such that packages (6) with different thicknesses can be conveyed along the test path (5).

10. An apparatus for leak testing gas-filled flexible packages, in particular for carrying out a method according to any one of the preceding claims, wherein the apparatus is provided with at least two endless conveyor belts (1, 2), the conveyor belts (1, 2) being designed for passing the packages (6) along a test path (5), while the conveyor belts (1, 2) are designed for exerting a test pressure on each package (6) along at least the pressure segment of the test path (5), the apparatus being provided with at least two thickness gauges (7, 8) designed for measuring the thickness of each package (6) at at least two test positions of the test path (5).

11. An apparatus according to claim 10, wherein said test path (5) extends at least partially, preferably substantially, in a substantially vertical direction.

12. An apparatus according to claim 10 or 11, wherein the test path (5) is provided with at least one bend (24).

13. An apparatus according to claim 12, wherein at least one of the thickness gauges (7) is arranged in front of the bend (24) and at least another thickness gauge (8) behind the bend (24), viewed along the test path (5).

14. An apparatus according to any one of claims 1 - 13, provided with press-on means (9, 22, 23) arranged along different press-on positions of the test path, while the press-on means (9, 22, 23) are each designed for pressing the first conveyor belt (1) towards the other conveyor belt (2).

15. An apparatus according to claim 14, wherein the press-on means (9, 22, 23) are designed for giving one conveyor belt (1) a freedom of movement relative to the other conveyor belt (2) such that packages (6) with different thicknesses can be conveyed along said press-on positions.

16. An apparatus according to any one of claims 10 - 15, wherein the length of a second part (1b) of one conveyor belt (1) located outside the test path (5) is adjustable, in particular can be shortened and lengthened again, for adjusting the length of the first part (1a) of the conveyor belt (1) located along the test path (5), in particular for lengthening and shortening it again.

17. An apparatus according to claim 16, wherein the second part (1b) of one conveyor belt (1) is guided along a number of guiding means (11, 111), while the guiding means (11, 111) are designed for adjusting the length of this second part (1b) of the conveyor belt (1) for the purpose of adjusting the length of this first part (1a).

18. An apparatus according to claim 17, wherein the guiding means (11, 111) are designed for adjusting the length of the second part (1b) of one conveyor belt (1) under the influence of a force applied by that second part (1b) on at least a part (111) of the guiding means.

19. An apparatus according to claim 17 or 18, wherein at least one of said guiding means (111) is translatable relative to the other guiding means (11) for the purpose of adjusting the lengths of the parts (1a, 1b) of one conveyor belt (1).

20. An apparatus according to any one of claims 10 - 19, wherein the conveyor belts (1, 2) are designed for passing at least two packages (6) with different thicknesses simultaneously along the test path and simultaneously exerting a test pressure thereon.

21. An apparatus according to any one of claims 10 - 20, wherein each thickness gauge (7, 8) comprises at least one sensor (22) designed for determining a displacement of at least a part of the conveyor belt (1) relative to the other conveyor belt (2).

22. An apparatus according to any one of claim 10 - 21, wherein the test path (5) has a length of at least approximately 2 m, in particular at least approximately 4 m.

23. An apparatus according to any one of claims 10 -22, provided with a control for rejecting each package (6) with a particular change of the thickness of this package determined by the thickness gauges (7, 8).

24. An apparatus according to any one of claims 10 - 23, provided with at least one cleaning apparatus for cleaning at least one of the conveyor belts (1, 2).

25. The use of an apparatus according to any one of claims 10 - 24 for leak testing at least one gas-filled flexible package.
